# EUROPÄISCHE PATENTSCHRIFT

(11) **EP 0 649 717 B1**
(45) Veröffentlichungstag und Bekanntmachung des Hinweises auf die Patenterteilung: **07.01.1999**
(21) Anmeldenummer: 93117217.5
(22) Anmeldetag: 23.10.1993
(51) Int. Cl.: B29B 7/40

(54) **Gerät zur Herstellung eines Mehrkomponenten-Gemischs**
Device for making a multicomponent mixture
Appareil pour la fabrication d'un mélange à plusieurs composants

(43) Veröffentlichungstag der Anmeldung: 26.04.1995
(73) Patentinhaber: POLYMERE Unternehmensverwaltungsgesellschaft mbH & Co. KG, 50829 Köln (DE)
(72) Erfinder: Baldauf, Günter, A-6914 Hohenweiler (AT); Fetz, Dietmar, A-6890 Lustenau (AT)
(74) Vertreter: König, Beate, Dipl.-Phys. Dr.

(56) Entgegenhaltungen:
- FR-A- 1 376 485
- FR-A- 2 143 620
- GB-A- 2 182 912
- US-A- 3 026 183
- US-A- 3 102 004
- US-A- 3 180 350
- US-A- 3 207 486
- US-A- 3 393 052
- US-A- 3 450 388
- US-A- 3 892 389
- US-A- 3 920 223

## Beschreibung

Die Erfindung betrifft ein Gerät zur Herstellung eines reaktiven Mehrkomponentengemisches mit einer Mischkammer, in der ein auf Drehung angetriebener Mischer angeordnet ist, in die wenigstens zwei Komponentenventile einmünden und die einen Auslaß für das Mehrkomponentengemisch hat, und wenigstens ein Blasluftventil sowie wenigstens ein Spülventil vorgesehen sind, die ebenfalls in die Mischkammer einmünden.

Zur Verarbeitung von Mehrkomponenten-Kunststoffgemischen, z. B. zum Zweck der Herstellung von reaktiven Klebstoffen, Schäummitteln, Vergußmassen und Elastomeren ist es bekannt, in eine Mischkammer mindestens zwei Komponenten eines Gemisches einzuspritzen, die in dieser Mischkammer unter Einfluß eines mechanisch angetriebenen Rührers reagieren. Das so fertig gestellte reaktive Gemisch wird über eine Auslaufdüse abgegeben.

Bei derartigen Mehrkomponenten-Mischkammern besteht das Problem der umweltfreundlichen Reinigung. Zwar ist es bekannt, die Mischkammer durch Einleiten einer entsprechenden Spüllösung auf Chemikalienbasis zu reinigen, Nachteil hierbei ist jedoch, daß diese Spüllösung praktisch nicht mehr umweltfreundlich entsorgt werden kann.

Die US-A-3 026 183 offenbart ein Gerät zur Herstellung eines reaktiven Mehrkomponentengemisches. Es weist eine Mischkammer mit einem Spülventil, über das ein flüssiges Lösungsmittel zugeleitet wird, und einem Blasventil, über das Druckluft zum Trocknen nach der Reinigung zugeleitet wird, auf. Das Lösungsmittel wird über Zusatzdurchlässe zugeführt und kann durch die verschiedenen Durchlässe des Mischkkopfes geleitet werden, um diesen von Materialresten zu reinigen. Dabei füllt das Lösungsmittel die zu reinigende Mischbohrung völlig. Es soll kein Raum lösungsmittelfrei bleiben, so daß eine Reinigung durch das Lösungsmittel überall erfolgt.

Die GB-A-2 182 912 offenbart eine Zumeßvorrichtung für Mediumkomponenten (insbesondere Farbe), die ein Reinigungselement aufweist. Bei dieser bekannten Zumeßvorrichtung befindet sich das Reinigungselement dicht bei den zu reinigenden Zumeßventilen, damit nur die Stellen gereinigt werden, an denen dies erforderlich ist. Die flächenmäßige Abstimmung von Reinigungselement und Zumeßventil geht auch aus der Formanpassung des Reinigungselements an diejenige des Zumeßventils hervor. Mehr im einzelnen: Es handelt sich bei dem Reinigungselement um eine Sprühdüse, aus der Wasser mit Druck austritt und die fakultativ zusätzlich mit Einbringung von Druckluft arbeitet und einen Flüssigkeitsnebel feiner Tröpfchen erzeugt, der auf die zu reinigenden Zumeßventile gesprüht wird, dort auffällt und Schmutzpartikel herunterwäscht.

Der Erfindung liegt die Aufgabe zugrunde, ein Gerät der eingangs genannten Art so weiterzubilden, daß eine umweltfreundliche Reinigung der Mischkammer gewährleistet ist.

Zur Lösung der gestellten Aufgabe ist die Erfindung durch die technische Lehre des Anspruchs 1 gekennzeichnet.

Zweckmäßige Weiterbildungen des Erfindung sind in den abhängigen Ansprüchen beschrieben.

Wesentliches Merkmal der Erfindung ist, daß als Spülmedium Wasser in einem Hochdruckstrahl vorgesehen ist. Bei der erfindungsgemäßen Reinigung wird aufgrund der hohen Bewegungsenergie der Wasserteilchen ein Abschäleffekt herbeigeführt, so daß die Komponenten von der Wandung der Mischkammer und dem Rührer abgeschält werden. Dieser mechanische Effekt findet in vergleichsweise kurzer Zeit statt, so daß ein Bruchteil der für die herkömmliche Reinigung eingesetzten Flüssigkeitsmenge eingesetzt werden muß. Damit ist weniger Flüssigkeit zu entsorgen und die Anlage ist schneller betriebsbereit.

Mit der gegebenen technischen lehre wird der wesentliche Vorteil erzielt, daß auf umweltgefährlich und umweltbelastende Reinigungschemikalien verzichtet werden kann und daß stattdessen ein Hochdruck-Wasserstrahl, der gegebenenfalls noch mit anderen Medien versetzt ist, in die Mischkammer eingeleitet wird.

Bei einem derartigen Hochdruck-Wasserstrahl handelt es sich um einen Wasserstrahl mit einem Druck im Bereich von 20 bis 200 bar. Mit diesem Wasserstrahl, der über ein oder mehrere Spülventile in die Mischkammer eingeleitet wird, ergibt sich nun der wesentliche Vorteil, daß aufgrund der hohen Bewegungsenergie der Wasserteilchen im Hochdruckstrahl es zu einem Abschäleffekt der zähflüssigen Komponenten an der Kammerwandung der Mischkammer kommt und außerdem wird auch der in der Mischkammer angeordnete Rührer entsprechend abgeschält und gereinigt.

Damit kann nun erstmals auf umweltgefährdende Reinigungschemikalien verzichtet werden und die Reinigung erfolgt nur mit dem Hochdruckstrahl selbst.

Die aus der Mischkammer mit dem Hochdruckstrahl ausgetragende Reinigungsflüssigkeit ist mit dem reaktiven Gemisch versetzt, aber nicht mehr umweltgefährlich.

Gegebenenfalls ist es vorgesehen, daß dem Hochdruckstrahl umweltfreundliche Reinigungschemikalien beigefügt werden, wie z. B. handelsübliche Haushaltsreiniger, die biologisch abbaubar sind.

Ebenso kann es vorgesehen sein, daß der Hochdruckstrahl entsprechend erwärmt wird, um insbesondere bei hochviskosen Mehrkomponenten-Gemischen die Viskosität herabzusetzen, um einen besseren Reinigungseffekt zu erzielen.
Ebenso kann es vorgesehen sein, dem Reinigungsstrahl Luft zuzusetzen, um den gesamten Reinigungsstrahl als Schäummittel auszubilden.

In einer bevorzugten Ausgestaltung der vorliegenden Erfindung ist vorgesehen, daß mehrere Spülventile am Umfang verteilt an der Mischkammer im Bereich des Oberteils des Kammergehäuses angeordnet sind. Dieses Oberteil ist leicht abnehmbar von der Mischkammer ausgebildet und ist als Ventilgehäuse ausgebildet. Im Bereich dieses Ventilgehäuses sind die erwähnten Spülventile angeordnet, wobei in diesem Bereich ebenso noch die Komponentenventile zum Eintragen der reaktiven Kunststoff-Komponenten in die Mischkammer angeordnet werden können.

Ebenso kann in diesem Bereich ein Blasluftventil angeordnet werden, um nach erfolgter Spülung der Mischkammer diese mit Luft auszublasen und zu trocknen.

In einer bevorzugten Ausgestaltung der Erfindung sind hierbei die Spülventile schräg einwärts im Winkel, etwa von 45° in die Mischkammer gerichtet, um die Kammerwandungen, aber auch die Rührerwelle und den daran befestigten Mischer zu treffen und von der Chemikalie reinigen zu können.

In einer anderen Ausgestaltung der Erfindung ist es vorgesehen, daß die Spülventile nicht direkt im geraden Winkel in die Mischkammer gerichtet sind, sondern einen Reinigungsstrahl erzeugen, der in der Art eines Zyklons an der Kammerwandung entlangläuft und so in Form eines Wirbelstrahles die gesamte Kammerwandung und den Mischer beaufschlagt.

Ebenso ist es vorgesehen, daß im Bereich der Mischkammer oder im Bereich der Einblasöffnung der Spülventile strahlablenkende Mittel vorhanden sind, um den Reinigungsstrahl an bestimmte Stellen der Mischkammer hinzulenken.

Es können hierbei ein oder mehrere Spülventile an dem Ventilgehäuse der Mischkammer angeordnet sein.

Im folgenden wird die Erfindung anhand von mehrere Ausführungswege darstellenden Zeichnungen näher erläutert.

Es zeigen:
- Figur 1: teilweise schematisiert in Seitenansicht ein Mischkopf nach der Erfindung;
- Figur 2: die Draufsicht auf den Mischkopf in Richtung des Pfeiles II in Figur 1;
- Figur 3: schematisiert ein Schnitt durch eine Mischkammer nach der Erfindung mit einem Spülventil;
- Figur 4: einen Schnitt längs der Linie IV-IV in Figur 3;
- Figur 5: schematisiert ein Schnitt durch ein Spülventil.

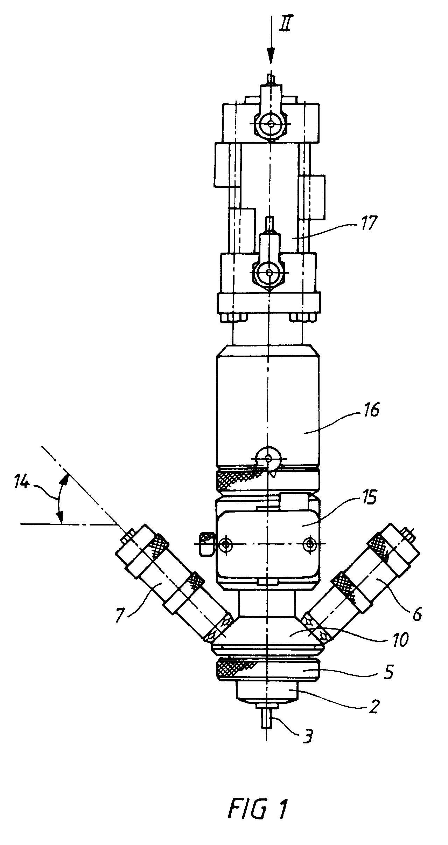

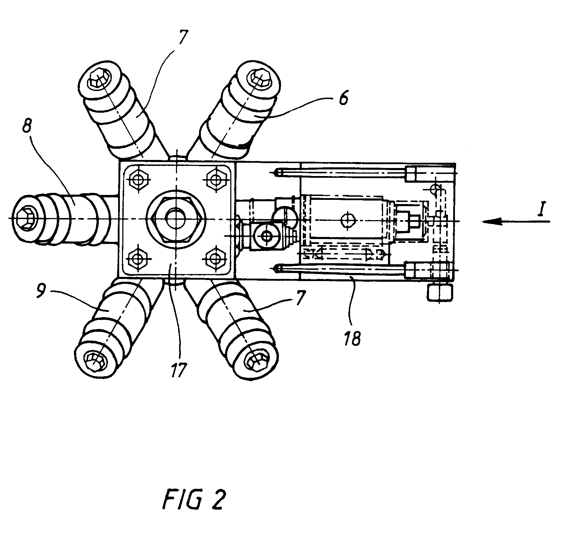

Gemäß den Figuren 1 und 2 besteht der Mischkopf im wesentlichen aus einer Mischkammer 1, die im Bereich eines Kammergehäuses 2 angeordnet ist, die eine untere Auslaufdüse 3 aufweist.

Oberhalb des Kammergehäuses 2 ist ein Ventilgehäuse 10 angeordnet, an dem schräg im Winkel 14 von z. B. 45° am Umfang verteilt mehrere Ventile angeordnet sind.

Gemäß den Figuren 1 und 2 sind hierbei diametral einander gegenüberliegende Spülventile 7 vorgesehen, zur Einleitung der vorher erwähnten Hochdruck-Reinigungsflüssigkeit.

Daneben ist ein Komponentenventil 6 zur Einleitung der Komponente A und ein Komponentenventil 9 zur Einleitung der Komponente B vorgesehen. Daneben ist noch ein Blasluftventil 8 angeordnet.

Zur lösbaren Verbindung des Kammergehäuses 2 mit dem Ventilgehäuse 10 ist ein Spannring 5 vorgesehen, damit das Kammergehäuse 2 leicht entfernt werden kann.

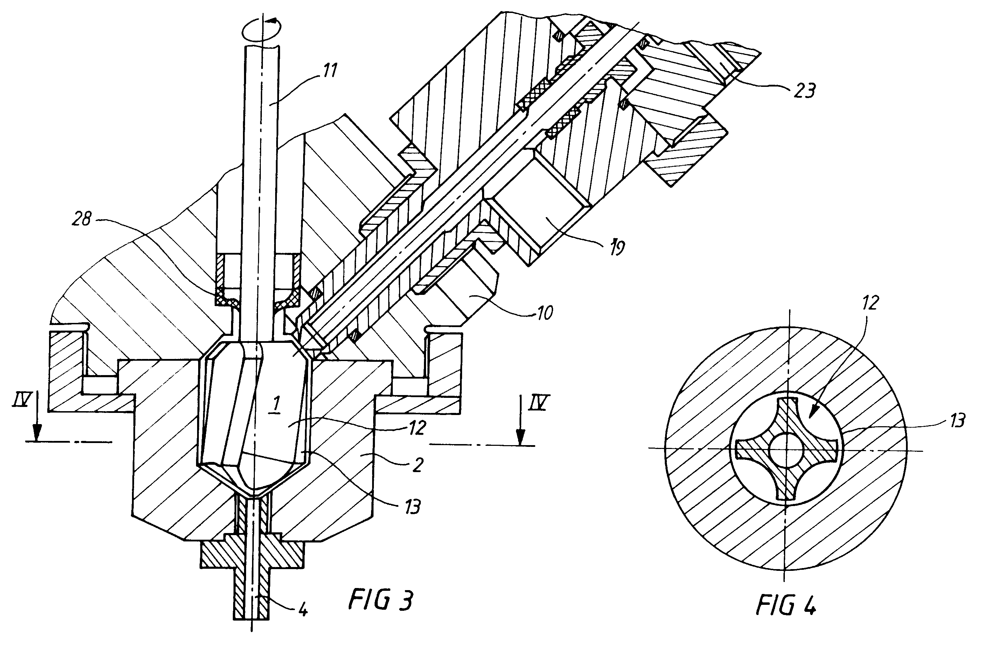

Gemäß Figur 3 ist in der Mischkammer 1 ein Mischer 12 angeordnet, der drehfest mit einer Rührerwelle 11 verbunden ist. Die Rührerwelle 11 ist abdichtend durch das Ventilgehäuse 10 hindurchgeführt und wird von einem Getriebe 15 angetrieben, welches von einem Luftmotor 18 beaufschlagt ist (vgl. auch Fig. 1 und 2). Die Abdichtung der Rührwelle 11 besteht aus einem profilierten Ring 28 aus Teflon. Dieses Material zeichnet sich durch hervorragende Gleiteigenschaften und deshalb durch einen geringen Wärmeaufbau aus. Der Teflonring hält auch den in der Kammer 1 herrschenden Drücken gut stand.

Oberhalb des Getriebes 15 ist über ein Zwischenstück 16 ein Hubzylinder 17 angeordnet.

Der Hubzylinder 17 steuert eine nicht näher dargestellte Ventilstange an, welche Ventilstange den Auslauf 4 und die darunter angeordnete Auslaufdüse 3 gesteuert öffnet und schließt.

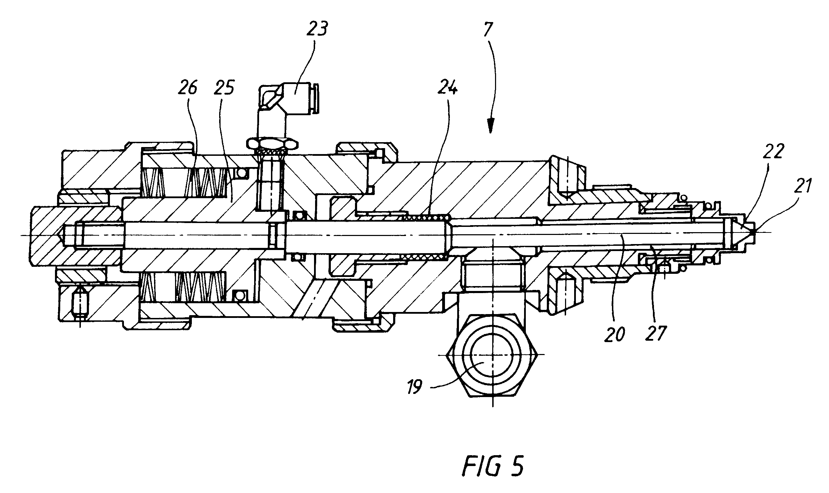

Wichtig ist nun, daß im Bereich oberhalb der Mischkammer 1, nämlich im Ventilgehäuse 10, ein oder mehrere Spülventile 7 angeordnet sind, wobei jedes Spülventil in der Art ausgebildet ist, wie es in Figur 5 dargestellt ist. Es ist hierbei ein Wassereinlaß 19 vorgesehen, über den das Hochdruckmedium bei geöffneter Düsennadel 20 durch die Düsenöffnung 21 in die Mischkammer 1 eingespritzt wird, so daß die gesamten Kammerwandungen 13 von dem Spülmedium beaufschlagt werden. Ebenso werden alle Wandungen des Mischers 12 von dem Spülmedium getroffen und entsprechend abgeschält und gereinigt.

Aus Figur 5 gehen weitere Einzelheiten eines Spülventils 7 hervor.

Im wesentlichen ist in einem Gehäuse eine Düsennadel 20 längs verschiebbar und abdichtend angeordnet, wobei die Spitze 22 der Düsennadel 20 eine Düsenöffnung 21 verschließt oder freigibt.

Die Düsennadel 20 ist abdichtend durch eine Stopfbüchse 24 hindurchgeführt und ist an ihrem hinteren Ende mit einem Luftkolben 25 verbunden, der über Einleitung von Luft in einen Lufteinlaß 23 in Längsrichtung gegen die Kraft einer Feder 26 verschiebbar ist.

Sobald Luft auf den Lufteinlaß 23 gegeben wird, wird somit die Düsennadel 20 in Figur 4 nach links verschoben und gibt die Spitze 22 frei.

Am Wassereinlaß 19 steht das Hochdruckmedium an und wird somit über die Düsenbohrung 27 aus der Spitze 22 mit hohem Druck in die Mischkammer 1 eingeführt.

Statt der Ausbildung der Spitze 22 als Nadeldüse kommen auch andere Düsenarten in Frage, wie z. B. Ringdüsen, bewegbare Fräsdüsen und dergleichen mehr.

Wichtig ist, daß mit einem Hochdruck-Spülmedium, das Wasser und gegebenenfalls Reinigungschemikalien und gegebenenfalls auch Luft enthält, eine umweltfreundliche Reinigung der Mischkammer und des dort drehend angeordneten Mischers 12 erfolgt.

## Patentansprüche

1. Gerät zur Herstellung eines reaktiven Mehrkomponentengemisches mit einer Mischkammer (1), in der ein auf Drehung angetriebener Mischer (12) angeordnet ist, in die wenigstens zwei Komponentenventile (9) einmünden, und die einen Auslaß (3) für das Mehrkomponentengemisch hat und wenigstens ein Blasluftventil (8) sowie wenigstens ein Spülventil (7) vorgesehen sind, die ebenfalls in die Mischkammer einmünden, dadurch **gekennzeichnet,** daß als Spülmedium Wasser in einem Hochdruckstrahl vorgesehen ist, dem ggf. ein biologisch abbaubares Reinigungsmittel zugegeben ist.

2. Gerät nach Anspruch 1, **dadurch gekennzeichnet,** daß mehrere der Spülventile (7) über den Umfang der Mischkammer (1) verteilt an einem Oberteil (10) des Kammergehäuses (2) angeordnet sind, das lösbar mit dem Oberteil verbunden ist.

3. Gerät nach einem der Ansprüche 1 - 2, **dadurch gekennzeichnet,** daß die Spülventile (7) sowie ggf. das Blasluftventil mit der Drehachse der Welle (11) des Mischers (12) einen Winkel von etwa 45° einschließt.

4. Gerät nach einem der Ansprüche 1 - 3, **dadurch gekennzeichnet,** daß die Spülventile (7) versetzt zur Drehachse der Welle (11) des Mischers (12) derart angeordnet sind, daß sie einen Wirbelstrahl erzeugen.

5. Gerät nach einem der Ansprüche 1 - 4, **dadurch gekennzeichnet,** daß in der Mischkammer (1) feststehende Mittel vorgesehen sind.

6. Gerät nach Anspruch 1, dadurch **gekennzeichnet,** daß das Spülmedium erwärmt ist.

## Claims

1. Device for making a reactive multi-component mixture, comprising a mixing chamber (1) in which is arranged a rotatably driven mixer (12), into which chamber at least two component valves issue, and which chamber has an outlet (3) for the multi-component mixture and at least one blast air valve (8) as well as at least one flushing valve (7), which valves likewise issue into the mixing chamber, characterised in that water in a high pressure stream is provided as flushing medium, which water may have added to it a biologically degradable cleaning means.

2. Device according to claim 1, characterised in that a plurality of the flushing valves (7) are arranged on an upper part (10) of the chamber housing (2) distributed around the periphery of the mixing chamber (1), with the chamber housing being connected releasably to the upper part.

3. Device according to one of claims 1-2, characterised in that the flushing valves (7), as well as possibly the blast air valve, subtend an angle of about 45° to the axis of rotation of the shaft (11) of the mixer (12).

4. Device according to one of claims 1-3, characterised in that the flushing valves (7) are arranged offset relative to the axis of rotation of the shaft (11) of the mixer (12) such that they produce a swirling stream.

5. Device according to one of claims 1-4, characterised in that fixed means are provided in the mixing chamber (1).

6. Device according to claim 1, characterised in that the flushing medium is heated.

## Revendications

1. Appareil pour la fabrication d'un mélange réactif à plusieurs composants comportant une chambre de mélange (1) à l'intérieur de laquelle est disposé un mélangeur (12) entraîné en rotation, dans laquelle débouchent au moins deux valves à composants (9), qui présente une sortie (3) pour le mélange à plusieurs composants et dans laquelle sont prévues au moins une valve de soufflage d'air (8) et au moins une valve de lavage (7) qui débouchent également dans la chambre de mélange, caractérisé par le fait qu'il est prévu comme agent de lavage de l'eau en jet haute pression éventuellement additionnée d'un agent de nettoyage biodégradable.

2. Appareil selon la revendication 1, caractérisé par le fait que plusieurs valves de lavage (7) réparties sur le pourtour de la chambre de mélange (1) sont disposées dans la partie supérieure (10) du corps de chambre (2) qui est lié de manière démontable à la partie supérieure.

3. Appareil selon une des revendications 1 - 2, caractérisé par le fait que les valves de lavage (7) ainsi que le cas échéant la valve de soufflage d'air forment un angle d'environ 45° avec l'axe de rotation de l'arbre (11) du mélangeur (12).

4. Appareil selon une des revendications 1 - 3, caractérisé par le fait que les valves de lavage (7) sont décalées par rapport à l'axe de rotation de l'arbre (11) du mélangeur (12) de telle sorte qu'elles génèrent un jet tourbillonnaire.

5. Appareil selon une des revendications 1 - 4, caractérisé par le fait qu'un moyen fixe est prévu dans la chambre de mélange (1).

6. Appareil selon la revendication 1, caractérisé par le fait que l'agent de nettoyage est réchauffé.
